# EUROPÄISCHE PATENTSCHRIFT

(11) **EP 0 856 102 B1**
(45) Veröffentlichungstag und Bekanntmachung des Hinweises auf die Patenterteilung: **31.10.2001**
(21) Anmeldenummer: 96925658.5
(22) Anmeldetag: 04.07.1996
(51) Int. Cl.: F02M 35/10

(54) **SAUGROHR**
INTAKE PIPE
TUBULURE D'ADMISSION

(30) Priorität: 20.10.1995 DE 19539078
(43) Veröffentlichungstag der Anmeldung: 05.08.1998
(73) Patentinhaber: FILTERWERK MANN+HUMMEL GMBH, 71631 Ludwigsburg (DE)
(72) Erfinder: SPANNBAUER, Helmut, D-71640 Ludwigsburg (DE)
(74) Vertreter: Voth, Gerhard, Dipl.-Ing.
(86) Internationale Anmeldenummer: EP9602946
(87) Internationale Veröffentlichungsnummer: WO9715755

(56) Entgegenhaltungen:
- EP-A- 0 664 390
- DE-A- 4 439 792
- US-A- 4 175 504
- US-A- 4 517 940
- US-A- 4 803 962

## Beschreibung

Die Erfindung betrifft ein Saugrohr für einen Verbrennungsmotor, wobei das Saugrohr über wenigstens einen motorseitigen Flansch, wenigstens zwei Rohrelementen sowie wenigstens einen mit den Rohrelementen kommunizierenden Sammelraum verfügt.

Derartige Saugrohre sind z. B. aus den Dokumenten US 4 803 962 und DE 44 39 792 A1 bekannt. Hierbei handelt es sich um Saugrohre, deren Saugkanäle von zwei unterschiedlichen Sammelräumen abgehen, welche durch eine Trennwand voneinander getrennt sind. Die Sammelräume sind parallel zueinander angeordnet, wodurch die Trennwand eine gewisse Länge erreicht. Dadurch wird das Bauteil komplizierter in der Herstellung und dessen Gewicht erhöht sich. Die mit der beschriebenen Gestaltung der Saugrohre erreichten Effekte beziehen sich in erster Linie auf eine verbesserte Aufladung der Zylinder mit Verbrennungsluft.

Gemäß dem Dokument EP 664 390 A1 ist ein Saugrohr offenbart, welches einen Sammelraum aufweist, der mittig quer durch eine Steuerklappe geteilt ist. Diese erzeugt die bereits beschriebenen Aufladungseffekte für die einzelnen Zylinder der Brennkraftmaschine. Außerdem kann diese Klappe akustisch vorteilhaft benutzt werden. Allerdings bedeutet die Verwendung eines Stellelementes einen enormen konstruktiven Aufwand, wodurch die Wirtschaftlichkeit der vorgeschlagenen Lösung leidet.

Aufgabe der Erfindung ist es daher, ein Saugrohr zu schaffen, welches sich einerseits kostengünstig herstellen lässt und andererseits eine Einrichtung zur wirksamen Verminderung der akustischen Emission aufweist. Diese Aufgabe wird durch die Merkmale des Patentanspruches 1 gelöst.

Erfindungsgemäß wird die Aufgabe dadurch gelöst, dass in dem Sammelraum ein Trennelement angeordnet ist, welches ganz oder teilweise aus einem porösen Material besteht.

Eine vorteilhafte Weiterbildung der Erfindung sieht vor, dass das Saugrohr aus Kunststoff besteht. Durch die Verwendung von Kunststoff wird das Saugrohr leichter, der Kraftstoffverbrauch sinkt dadurch.

Weiterhin kann man vorteilhafterweise vorsehen, daß das Saugrohr in Halbschalentechnik gefertigt ist. Diese Fertigungstechnik weist bei einfachen Geometrien Kostenvorteile auf.

Eine andere vorteilhafte Weiterbildung der Erfindung sieht vor, daß das Trennelement im wesentlichen 100% des Sammelraumquerschnitts umfaßt. Dadurch, daß das Trennelement den Sammelraum im wesentlichen in zwei Teile teilt, wird die Entstehung von Schwingungsmoden ganz oder teilweise unterbunden.

Eine vorteilhafte Weiterbildung der Erfindung sieht vor, daß das Trennelement 25 bis 75 % des Sammelraumquerschnitts umfaßt. Um die Schwingungsmoden bei der Ausbreitung zu stören, genügt auch schon eine teilweise Querschnittsverringerung, so daß diese Variante eine weitere Gewichtsreduzierung erbringt, wobei die Luft als Schwingungsmasse durch die Querschnittsverengung hindurch auf ein dahinterliegendes, als Feder wirkendes Luftvolumen trifft. Weiterhin ist es wichtig, darauf zu achten, daß die linearen Abmessungen klein zur Wellenlänge sind, das vermeidet Streuung im Bereich Querschnittsverengung.
Von Vorteil ist es auch, die Randeinspannung der Trennelemente elastisch zu lagern.

Vorteilhafterweise kann man vorsehen, daß der Abstand vom Trennelement zur Sammelrauminnenwandung nicht ganzzahlig durch die im Hauptbetriebszustand auftretenden Wellenlängen oder ein Vielfaches davon teilbar ist. Dies verhindert das Auftreten stehender Wellen.

Eine vorteilhafte Weiterbildungen der Erfindung sieht vor, daß der Abstand vom Trennelement zur Sammelrauminnenwandung veränderbar ist. Durch die geeignete Auswahl der Geometrie, bzw. deren Anpassung an den jeweiligen Betriebszustand, z.B. durch verschiebliche Zwischenwände mittels elektrischer Einrichtungen oder durch unterdruckunterstützte Elemente, wird das Auftreten stehender Wellen verhindert, da diese gerade dann entstehen, wenn eine Welle nach z. B. zweimaliger Reflexion wieder mit derselben Phase am Ausgangspunkt ankommt.
- Figuren 1a und 1b: zeigen die Trennung des Sammelraumes mittels eines Trennelementes.
- Figuren 2a bis 2e: zeigen Ausführungsformen von Trennelementen.

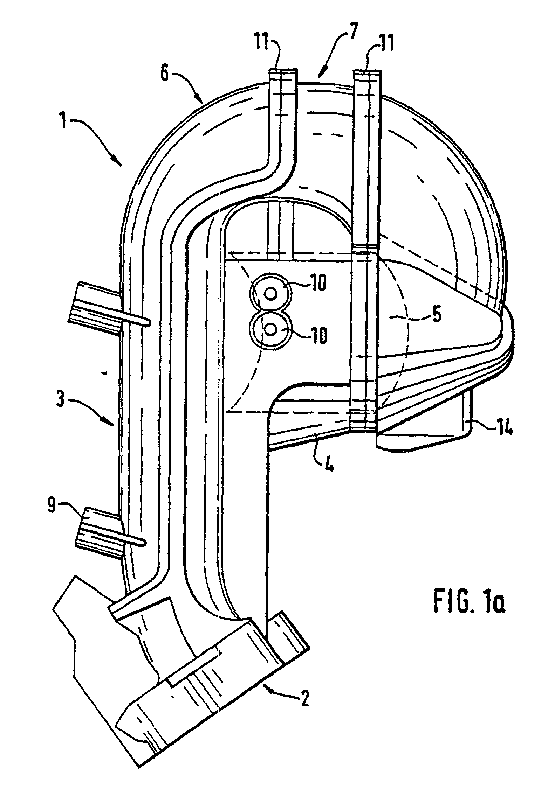

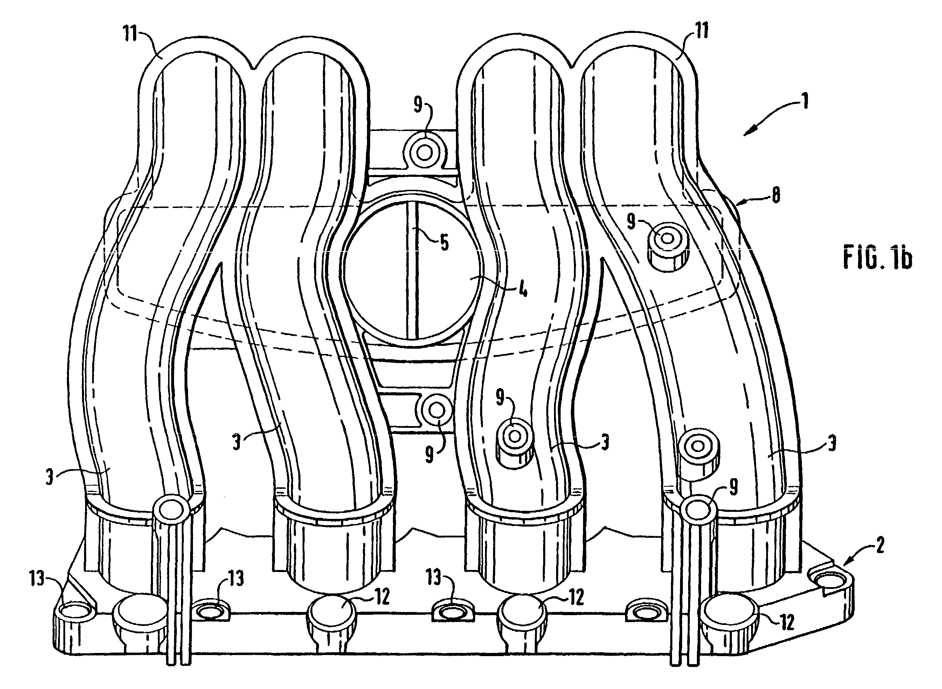

Das Saugrohr 1, das im beschriebenen Ausführungsbeispiel in Halbschalentechnik gefertigt ist, weist wie in Figur 1a zu sehen ist die hierfür typischen Schweißnähte 11 auf, die z. B. die Halbschalenelemente 6 und 7 miteinander verbindet. Zur Verbindung mit dem eigentlichen und hier nicht dargestellten Motorblock verfügt das Saugrohr 1 über einen Flansch 2. Die Rohrelemente 3 münden alle im Sammelraum 4, der von einem, in Figur 1 schematisch dargestellten Trennelement 5 halbiert wird. Das Saugrohr 1 wird mittels der Halter 9 im nicht dargestellten Motorraum z. B. eines Personenkraftwagens befestigt. Mittels der am Saugrohr 1 angebrachten Unterdruckanschlüsse 10 werden die Druckverhältnisse im Inneren des Saugrohrs erfasst und z. B. zu Steuerungszwecken verwendet. In Figur 1a ist am Saugrohr 1 ebenfalls ein Anschluß zur Abgasrückführung 14 zu erkennen.
Das in Figur 1b dargestellte Saugrohr 1 weist einen motorseitigen Flansch 2 auf, mittels diesem das Saugrohr am Motorblock des Verbrennungsmotors befestigt ist, Dieser motorseitige Flansch 2 ist mittels Rohrelementen 3, die ihrerseits in dieser Ausführungsform aus Kunststoff-Halbschalenelementen 6 und 7 zusammengesetzt sind, mit einem Sammelraum 4 verbunden, welcher seinerseits mit dem nicht dargestellten Luftfilter kommuniziert. Dieser Sammelraum 4 ist in seiner räumlichen Ausbreitung durch ein Trennelement 5 eingeschränkt und von einer Gehäusewand 8 gesäumt. Dieses Trennelement 5 wirkt als Ausbreitungsbarriere für vom Betriebszustand der Verbrennungskraftmaschine abhängigen Schwingungsmoden. Mittels der Halter 9 ist das Saugrohr 1 im Motorraum befestigt. Das Saugrohr 1, das im beschriebenen Ausführungsbeispiel in Halbschalentechnik gefertigt ist, weist, wie in Figur 1b zu sehen ist die hierfür typischen Schweißnähte 11 auf. Am Saugrohr 1 sind Einspritzventilaufnahmen 12 vorgesehen, in die die nicht dargestellten Einspritzventile eingesetzt werden sowie Befestigungslöcher 13, über die das Saugrohr am Motorblock befestigt wird.

Alternativ kann das gesamte Saugrohr auch in Ausschmelztechnik gefertigt werden, hierfür ist aber eine gewisse Komplexität der Geometrie notwendig, z. B. komplizierte Innenkonturen, so daß im Falle der Halbschalentechnik mehrere Schalen notwendig wären, damit die Kostensituation des Herstellungsverfahrens für die Ausschmelztechnik Vorteile aufweisen würde.

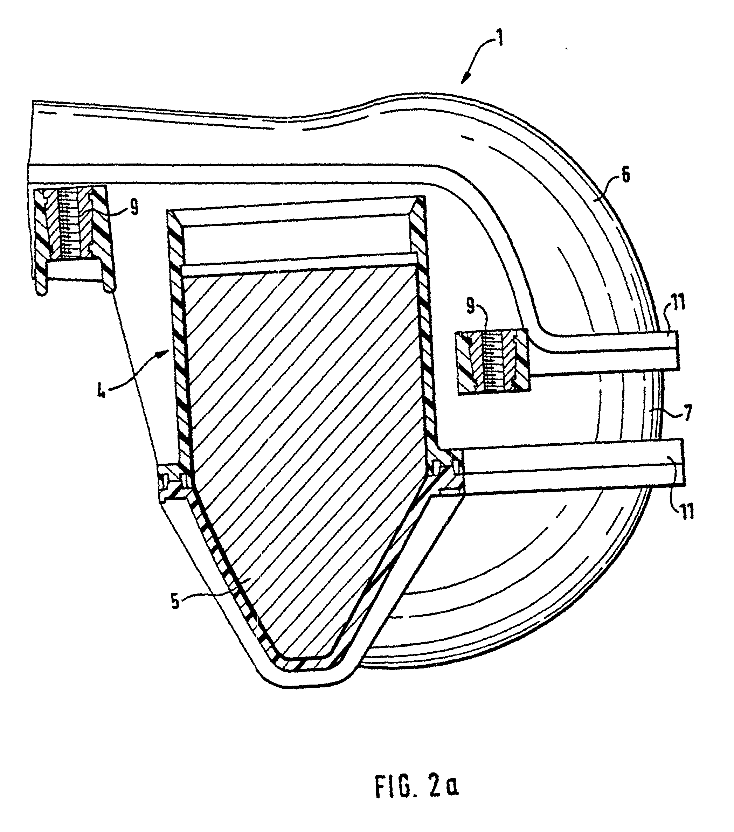

In den Figuren 2a bis 2e sind unterschiedliche Ausgestaltungen von Trennelementen 5 zu sehen.

In Figur 2a wird das in Figur 1a dargestellte Saugrohr 1 im Schnitt dargestellt, wobei das dargestellte Trennelement 5 beinahe die gesamte Querschnittsfläche des Sammelraumes 4 umfasst. Ebenfalls dargestellt sind die Schweißnähte 11, die z. B, die Halbschalenelemente 6 und 7 verbinden. Befestigt wird das Saugrohr 1 mittels der Halter 9 im Motorraum.

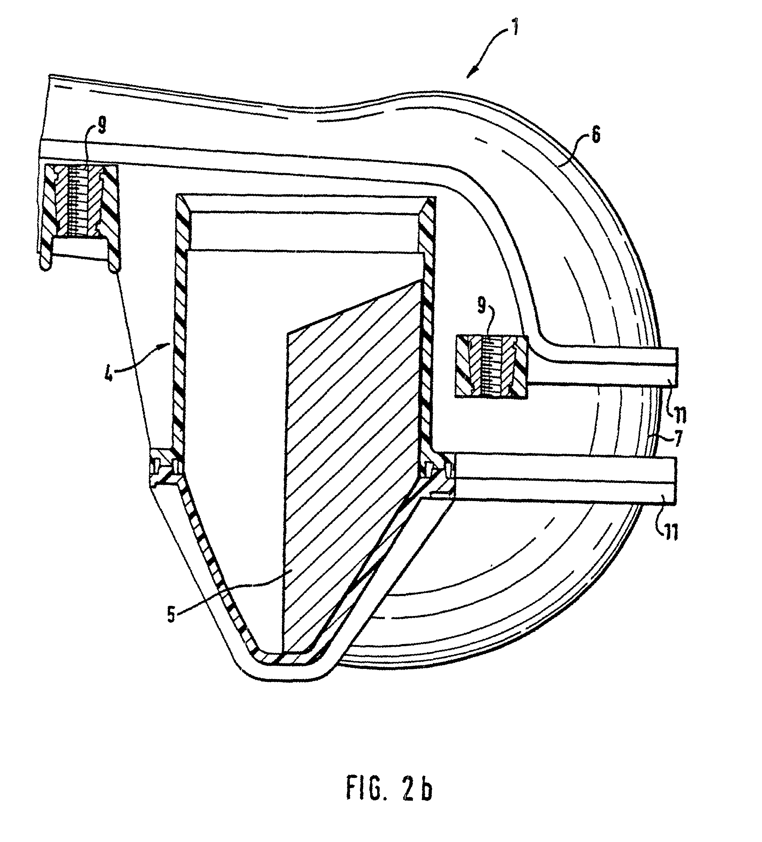

In Figur 2b wird das in Figur 1a dargestellte Saugrohr 1 im Schnitt dargestellt, wobei das dargestellte Trennelement 5 lediglich etwa ein Viertel der Querschnittsfläche des Sammelraumes 4 umfasst. Ebenfalls dargestellt sind die Schweißnähte 11, die z. B. die Halbschalenelemente 6 und 7 verbinden Befestigt wird das Saugrohr 1 mittels der Halter 9 im Motorraum.

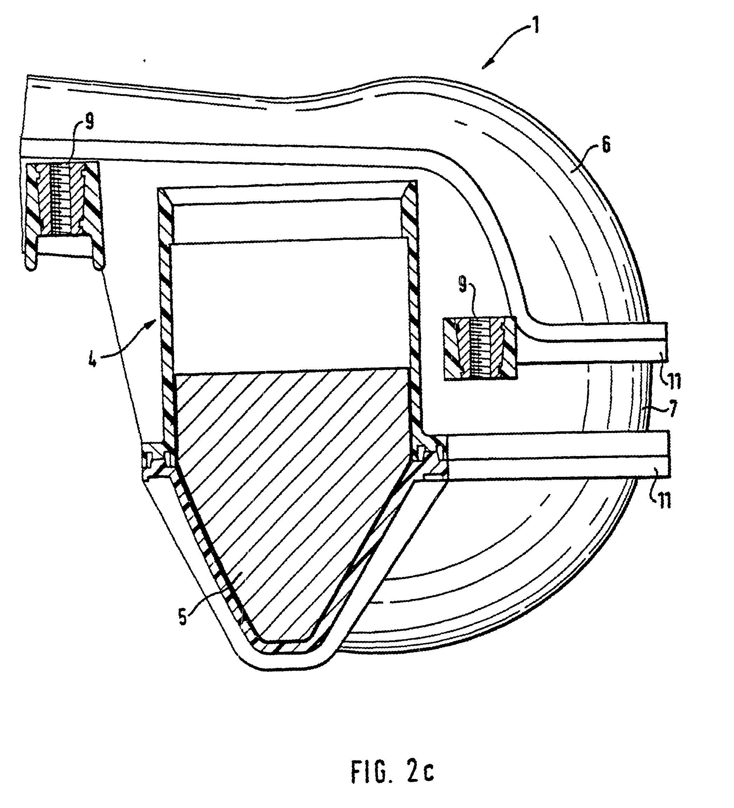

In Figur 2c wird das in Figur 1a dargestellte Saugrohr 1 im Schnitt dargestellt, wobei das dargestellte Trennelement 5 nur die Hälfte der Querschnittsfläche des Sammelraumes 4 umfasst. Ebenfalls dargestellt sind die Schweißnähte 11, die z. B. die Halbschalenelemente 6 und 7 verbinden. Befestigt wird das Saugrohr 1 mittels der Halter 9 im Motorraum.

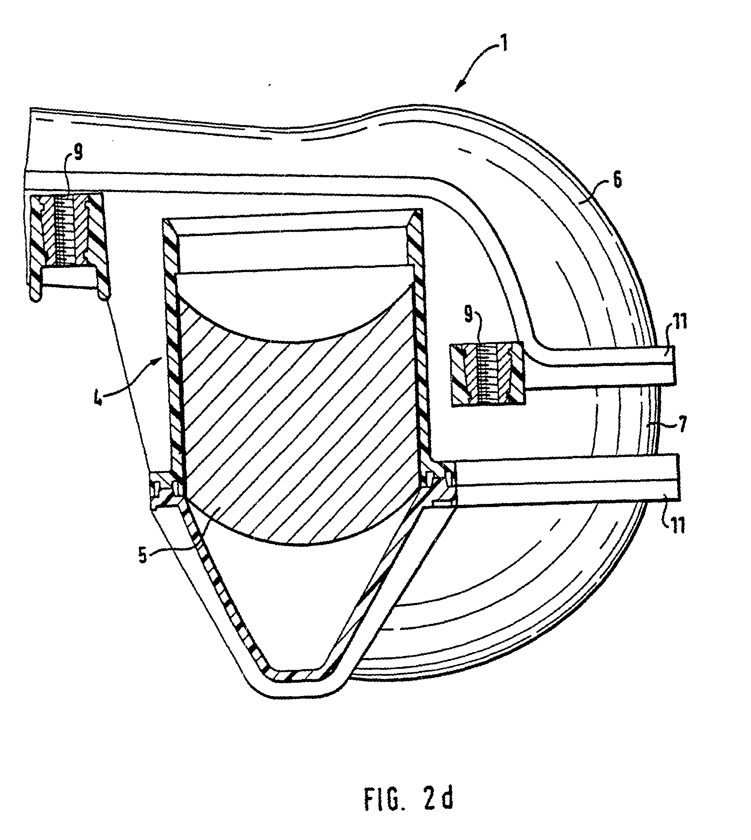

In Figur 2d wird das in Figur 1a dargestellte Saugrohr 1 im Schnitt dargestellt, wobei das dargestellte Trennelement 5 etwa ein Drittel der Querschnittsfläche des Sammelraumes 4 umfasst. Ebenfalls dargestellt sind die Schweißnähte 11, die z. B. die Halbschalenelemente 6 und 7 verbinden. Befestigt wird das Saugrohr 1 mittels der Halter 9 im Motorraum.

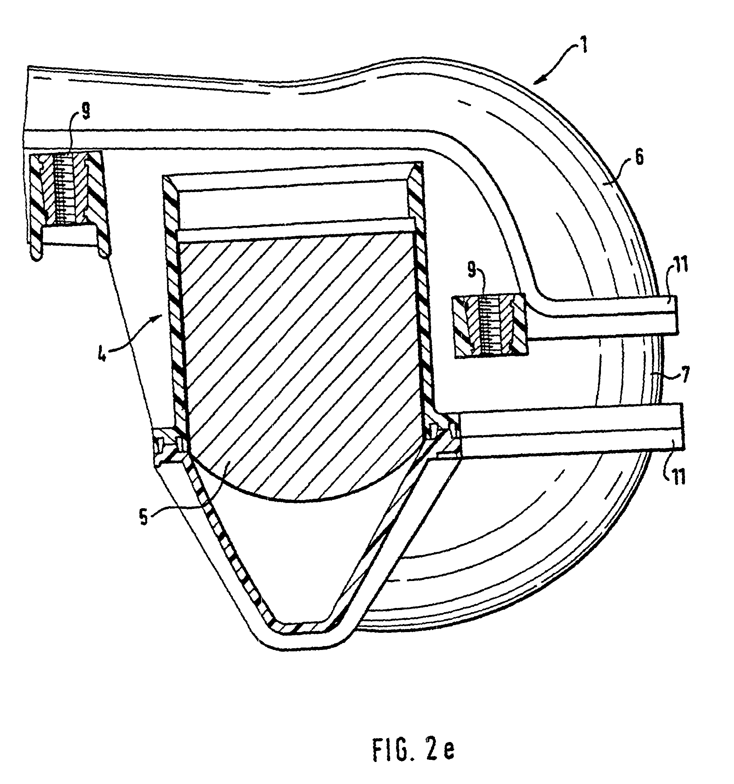

In Figur 2e wird das in Figur 1a dargestellte Saugrohr 1 im Schnitt dargestellt, wobei das dargestellte Trennelement 5 ca. zwei Drittel der Querschnittsfläche des Sammelraumes 4 umfasst. Ebenfalls dargestellt sind die Schweißnähte 11, die z. B. die Halbschalenelemente 6 und 7 verbinden. Befestigt wird das Saugrohr 1 mittels der Halter 9 im Motorraum.

Die in den Figuren 2b bis 2e dargestellten Trennelemente 5 ergeben eine Reduzierung der Lärmemission des Saugrohrs, auch wenn der Querschnitt des Sammelraums 4 nur zu 25 bis 75% reduziert wird. Zum einen spart dies weiteres Material, was einer Gewichtsreduzierung entspricht, zum anderen wirkt die Luft hinter dem Trennelement 5 wie eine Feder auf die durch die durch Trennelement 5 hervorgerufene Querschnittsverringerung tretenden Luftmassen. Eine weitere Alternative ist in der elastischen Lagerung von Trennelement 5 zu sehen, was zu einer weiteren Reduzierung der Lärmemission des Saugrohresl führt.
Die Anordnung von Trennelement 5 im Sammelraum 4 so, daß die Abstände von Gehäusewandung 8 des Sammelraums zum Trennelement 5 nicht ganzzahlig durch die Wellenlänge der durch die Luftströmung erzeugten Schwingungen oder deren Vielfaches teilbar ist, sorgt für eine Reduzierung der Geräuschemissionen des Saugrohres 1 Eine weitere Alternative, die nicht in der Zeichnung dargestellt ist, sieht vor, daß der Abstand von Trennelement 5 zur Gehäusewand 8 des Sammelraums 4 veränderbar ist. Durch die Verwendung entweder elektromotorisch gesteuerter Elemente, die die Trennwand 5 bewegen, oder die Unterstützung von Trennwand 5 durch unterdruckbewegte Elemente, wird es möglich, die ideale Position von Trennwand 5 zur Gehäusewandung 8 des Sammelraumes in Abhängigkeit des jeweiligen Betriebszustandes der Verbrennungskraftmaschine einzustellen.

## Patentansprüche

1. Saugrohr für einen Verbrennungsmotor, wobei das Saugrohr über wenigstens einen motorseitigen Flansch (2), wenigstens zwei Rohrelemente (3) sowie wenigstens einen mit den Rohrelementen (3) kommunizierenden Sammelraum (4) verfügt, wobei der Sammelraum (4) mittels eines Trennelements (5) in wenigstens zwei kommunizierende Teilräume unterteilt wird, **dadurch gekennzeichnet, dass** das Trennelement ganz oder teilweise aus einem porösen Material besteht.

2. Saugrohr nach Anspruch 1, **dadurch gekennzeichnet, daß** das Saugrohr (1) aus Kunststoff besteht.

3. Saugrohr nach einem oder mehreren der vorgenannten Ansprüche, **dadurch gekennzeichnet, daß** das Saugrohr (1) in Halbschalentechnik gefertigt ist

4. Saugrohr nach einem oder mehreren der vorgenannten Ansprüche, **dadurch gekennzeichnet, daß** das Trennelement (5) im wesentlichen 100 % des Sammelraumquerschnitts umfaßt.

5. Saugrohr nach einem oder mehreren der vorgenannten Ansprüche, **dadurch gekennzeichnet, daß** das Trennelement (5) 25 bis 75 % des Sammelraumquerschnitts umfaßt.

6. Saugrohr nach einem oder mehreren der vorgenannten Ansprüche, **dadurch gekennzeichnet, daß** der Abstand vom Trennelement zur Sammelrauminnenwandung nicht ganzzahlig durch die im Hauptbetriebszustand auftretende Wellenlänge oder ein Vielfaches davon teilbar ist

7. Saugrohr nach einem oder mehreren der vorgenannten Ansprüche, **dadurch gekennzeichnet, daß** der Abstand vom Trennelement zur Sammelrauminnenwandung veränderbar ist.

8. Saugrohr nach Anspruch 7, **dadurch gekennzeichnet, daß** der Abstand in Abhängigkeit vom Betriebszustand des Verbrennungsmotors veränderbar ist.

## Claims

1. Inlet manifold for an internal combustion engine, wherein the inlet manifold has at least one flange (2) at the end facing the engine, at least two pipe members (3) and at least one collecting chamber (4), which communicates with the pipe members (3), the collecting chamber (4) being divided into at least two communicating partial chambers by means of a dividing member (5), **characterised in that** the dividing member is formed wholly or partially from a porous material.

2. Inlet manifold according to claim 1, **characterised in that** the inlet manifold (1) is formed from plastics material.

3. Inlet manifold according to one or more of the above-mentioned claims, **characterised in that** the inlet manifold (1) is manufactured by the half-shell technique.

4. Inlet manifold according to one or more of the above-mentioned claims, **characterised in that** the dividing member (5) spans substantially 100 % of the collecting chamber cross-section.

5. Inlet manifold according to one or more of the above-mentioned claims, **characterised in that** the dividing member (5) spans 25 to 75 % of the collecting chamber cross-section.

6. Inlet manifold according to one or more of the above-mentioned claims, **characterised in that** the spacing between the dividing member and the internal wall of the collecting chamber is not integrally divisible by the wavelength occurring in the main operating state or by a multiple thereof.

7. Inlet manifold according to one or more of the above-mentioned claims, **characterised in that** the spacing between the dividing member and the internal wall of the collecting chamber is variable.

8. Inlet manifold according to claim 7, **characterised in that** the spacing is variable in dependence on the operating state of the internal combustion engine.

## Revendications

1. Tubulure d'admission pour moteur à combustion interne, qui dispose d'au moins une bride (2) du côté du moteur, d'au moins deux éléments tubulaires (3) ainsi que d'au moins une chambre collectrice (4) communiquant avec les éléments tubulaires (3), cette chambre étant divisée par un élément séparateur (5) en au moins deux chambres élémentaires,
**caractérisée en ce que**
l'élément séparateur est composé totalement ou en partie, d'un matériau poreux.

2. Tubulure d'admission selon la revendication 1,
**caractérisée en ce que**
la tubulure (1) est en matière plastique.

3. Tubulure d'admission selon l'une ou plusieurs des revendications précédentes,
**caractérisée en ce que**
la tubulure d'admission (1) est fabriquée selon 1a technique de la demi-coquille.

4. Tubulure d'admission selon l'une des revendications précédentes,
**caractérisée en ce que**
l'élément séparateur (5) occupe sensiblement 100 % de la section de la chambre collectrice.

5. Tubulure d'admission selon l'une des revendications précédentes,
**caractérisée en ce que**
l'élément séparateur (5) occupe 25 à 75 % de la section de 1a chambre collectrice.

6. Tubulure d'admission selon l'une des revendications précédentes,
**caractérisée en ce que**
la distance séparant l'élément séparateur de la paroi interne de la chambre collectrice n'est pas un multiple entier de la longueur d'onde en service, ou d'un multiple de celle-ci.

7. Tubulure d'admission selon l'une des revendications précédentes,
**caractérisée en ce que**
la distance entre l'élément séparateur et la paroi interne de la chambre collectrice est variable.

8. Tubulure d'admission selon la revendication 7,
**caractérisée en ce que**
la distance peut varier en fonction de l'état de fonctionnement du moteur à combustible interne.
